# EUROPEAN PATENT APPLICATION

(11) **EP 2 259 517 A2**
(43) Date of publication of application: **08.12.2010**
(21) Application number: 10163949.0
(22) Date of filing: 26.05.2010
(51) Int. Cl.: H04L 25/02, H04L 27/26

(54) **Channel estimation in an OFDM system**

(30) Priority: 03.06.2009 GB 0909627
(71) Applicant: Sony Corporation, Minato-ku Tokyo 108-0075 (JP)
(72) Inventor: Asjadi, Gholam Hosein, Guildford, Surrey GU1 2NU (GB)
(74) Representative: DeVile, Jonathan Mark

(57) **Abstract**

According to one aspect of the present invention there is provided a receiver for receiving OFDM symbols transmitted via a channel, the OFDM symbols comprising a plurality of data bearing sub-carriers on which data is transmitted and a plurality of pilot bearing sub-carriers on which pilot data is transmitted, the pilot sub-carriers being distributed throughout each OFDM symbol. The receiver comprises a pilot data extractor for extracting pilot data from the pilot sub-carriers of each OFDM symbol and a channel estimator operable to generate a frequency domain channel estimate of the channel. The receiver is operable to equalise each received OFDM symbol by substantially cancelling the effects of the channel according to the channel estimate produced by the channel estimator to increase a likelihood of correctly recovering data conveyed by the OFDM symbol. The channel estimator comprises a channel estimate vector generator arranged to generate a channel estimate vector comprising a plurality of samples, a spacing and value of the samples corresponding to the spacing and values of the pilot data extracted from the pilot sub-carriers, and a filter cascade arranged to receive as an input the channel estimate vector and operable to produce the channel estimate by interpolating between the samples of the channel estimate vector to produce an up-sampled version of the channel estimate vector corresponding to the channel estimate of the channel response of the channel at each sub-carrier position of the OFDM symbol.

## Description

### Field of the Invention

The present invention relates to receivers and methods for receiving Orthogonal Frequency Division Multiplexed (OFDM) symbols, at least some of the OFDM symbols including a plurality of data bearing sub-carriers and a plurality of pilot bearing sub-carriers.

### Background of the Invention

There are many examples of radio communications systems in which data is communicated using Orthogonal Frequency Division Multiplexing (OFDM). Systems which have been arranged to operate in accordance with Digital Video Broadcasting (DVB) standards for example, use OFDM. OFDM can be generally described as providing K narrow band sub-carriers (where K is an integer) which are modulated in parallel, each sub-carrier communicating a modulated data symbol such as Quadrature Amplitude Modulated (QAM) symbol or Quadrature Phase-shift Keying (QPSK) symbol. The modulation of the sub-carriers is formed in the frequency domain and transformed into the time domain for transmission. Since the data symbols are communicated in parallel on the sub-carriers, the same modulated symbols may be communicated on each sub-carrier for an extended period, which can be longer than a coherence time of the radio channel. The sub-carriers are modulated in parallel contemporaneously, so that in combination the modulated carriers form an OFDM symbol. The OFDM symbol therefore comprises a plurality of sub-carriers each of which has been modulated contemporaneously with different modulation symbols.

To facilitate detection and recovery of the data at the receiver, the OFDM symbol can include pilot sub-carriers, which communicate data-symbols known to the receiver. The pilot sub-carriers provide a phase and timing reference, which can be used to estimate an impulse response of the channel through which the OFDM symbol has passed, to facilitate detection and recovery of the data symbols at the receiver. In some examples, the OFDM symbols include both Continuous Pilot (CP) carriers which remain at the same relative frequency position in the OFDM symbol and Scattered Pilots (SP). The SPs change their relative position in the OFDM symbol between successive symbols, providing a facility for estimating the impulse response of the channel more accurately with reduced redundancy. It is desirable to provide receivers that generate optimal channel estimates based on pilot data extracted from the pilot sub-carriers despite variations in the pilot data from OFDM symbol to OFDM symbol.

### Summary of the Invention

According to one aspect of the present invention there is provided a receiver for receiving OFDM symbols transmitted via a channel, the OFDM symbols comprising a plurality of data bearing sub-carriers on which data is transmitted and a plurality of pilot bearing sub-carriers on which pilot data is transmitted, the pilot sub-carriers being distributed throughout each OFDM symbol. The receiver comprises a pilot data extractor for extracting pilot data from the pilot sub-carriers of each OFDM symbol and a channel estimator operable to generate a frequency domain channel estimate of the channel. The receiver is operable to equalise each received OFDM symbol by substantially cancelling the effects of the channel according to the channel estimate produced by the channel estimator to increase a likelihood of correctly recovering data conveyed by the OFDM symbol. The channel estimator comprises a channel estimate vector generator arranged to generate a channel estimate vector comprising a plurality of samples, a spacing and value of the samples corresponding to the spacing and values of the pilot data extracted from the pilot sub-carriers, and a filter cascade arranged to receive as an input the channel estimate vector and operable to produce the channel estimate by interpolating between the samples of the channel estimate vector to produce an up-sampled version of the channel estimate vector corresponding to the channel estimate of the channel response of the channel at each sub-carrier position of the OFDM symbol.

In order for a receiver to successfully demodulate a received OFDM signal, a channel response for each sub-carrier position on each OFDM symbol must be estimated. In DVB schemes such as DVB-T and DVB-T2, this achieved by interpolating between pilot data extracted from the pilot sub-carriers. Interpolation techniques that can be used include temporal-frequency interpolation and frequency interpolation. In temporal-frequency interpolation, channel estimates for data bearing sub-carriers between pilot sub-carriers are generated by interpolating between pilot sub-carriers on the same OFDM symbol (frequency interpolation) and across OFDM symbols (temporal interpolation). For frequency interpolation, channel estimates are provided simply by interpolating between pilot sub-carriers on a single OFDM symbol. Frequency interpolation has an advantage over temporal-frequency interpolation because channel estimates can be produced on an OFDM symbol-by-OFDM symbol basis without the need to refer to previously received OFDM symbols or predict likely pilot values from future OFDM symbols. In accordance with this aspect of the invention, a receiver is provided which is able to derive a channel estimate for a received OFDM symbol using frequency interpolation and thus is able to derive a channel estimate on an OFDM symbol-by-OFDM symbol basis without the need to store, process and predict pilot data from other OFDM symbols.

In one example of the invention the filter cascade comprises six up-sampling finite impulse response (FIR) filter stages, the first, second, third, fourth and fifth FIR filter stage arranged to up-sample by a factor of two and the sixth FIR filter stage up-samples by a factor of three.

There are certain characteristics that an ideal filter cascade would demonstrate for the purposes of channel estimate vector interpolation. These characteristics include a linear phase response; a filter order as small as possible to reduce delay and hardware size, and an appropriate level of out-of-band rejection to minimise aliasing. It has been found that, taking these characteristics into account, this particular filter cascade arrangement exhibits particularly beneficial filter characteristics.

According to another example of the present invention, the pilot bearing sub-carriers include a plurality of scattered pilot sub-carriers distributed across the OFDM symbol such that adjacent scattered pilot sub-carriers are equally separated from each other by a predefined number of data-bearing sub-carriers. The OFDM symbol also includes a first edge pilot sub-carrier on a beginning sub-carrier of the OFDM symbol and a final edge pilot sub-carriers on a final sub-carrier of the OFDM symbol. The channel estimate vector generator is arranged to ensure that samples which make up the channel estimate vector are equally spaced by forming first and last samples of the channel estimate vector based on the first and final edge pilot carriers at virtual carrier positions displaced from nearest pilot carriers by the predefined number of data-bearing sub-carriers.

Some OFDM systems such as DVB-T2, include pilot patterns which mean that the position of certain pilot sub-carriers vary from OFDM symbol-to-OFDM symbol. The arrangement of the pilot sub-carriers in the pilot patterns is a trade-off between an accuracy of the estimate of the channel impulse response and an overhead in sacrificing data bearing sub-carriers for pilot sub-carriers. Accordingly, it is not always possible to guarantee that a regularly spaced channel estimate vector can be directly derived from the pilot data extracted from the pilot sub-carriers. Accordingly, in this example of the present invention, the channel estimate vector generator is arranged to generate the channel estimate vector by shifting edge pilot sub-carriers, which are always located on the first and last sub-carrier of the OFDM symbol to "virtual" sub-carrier positions which will ensure that a regularly spaced channel estimate vector is generated.

According to another example of the present invention the channel estimate vector generator is operable to append to the beginning of the channel estimate vector a first additional set of samples and append to the end of the channel estimate vector a second additional set of samples, prior to interpolation by the filter cascade.

When generating a channel estimation using frequency interpolation between pilot sub-carriers of an OFDM symbol, there will be an increased interpolation error at the outlying frequencies because beyond the edge of the OFDM symbol, there is no further information (i.e. pilot sub-carriers from which pilot data can be extracted) with which to increase the accuracy of the interpolation. In accordance with this example of the present invention, the channel estimate vector generator is operable to extend the channel estimate vector at either end with additional samples to reduce interpolation errors at the edge of the channel estimate.

Various further aspects and features of the invention are defined in the appended claims.

### Brief Description of the Drawings

Embodiments of the present invention will now be described by way of example only with reference to the accompanying drawings where like parts are provided with corresponding reference numerals and in which:
Figure 1 provides a schematic diagram showing a typical DVB-T2 transmitter chain;
Figure 2 provides a provides a schematic diagram showing a typical DVB-T2 receiver chain;
Figure 3 provides a schematic diagram illustrating the generation of a channel estimate vector;
Figure 4a and 4b provide schematic diagrams illustrating the interpolation of the channel estimate vector;
Figure 5 provides an example of a receiver arranged in accordance with the present invention;
Figure 6 summarises an example process for generating a channel estimate in accordance with the present technique;
Figure 7a and 7b show example filter cascades that can be implemented in accordance with the present technique;
Figure 8 summarises a process for producing the channel estimate using the filter cascades Figures 7a and 7b;
Figures 9a to 9h provide a series of graphs showing the time and frequency characteristics of the filter cascade shown in Figure 7b;
Figure 10a and 10b provide a schematic diagrams illustrating a problem with a non-regularly spaced channel estimate vector;
Figure 11 provides a schematic diagram illustrating a solution to the non-regularly spaced channel estimate vector problem;
Figure 12 provides MATLAB code for three different methods of extending the channel estimate vector in accordance with an example of the present invention;
Figure 13 provides a graph illustrating an end section of channel estimate vector showing the extensions provided by the code shown in Figure 12, and
Figure 14 provides a flow diagram summarising a method according to the present invention.

### Detailed Description

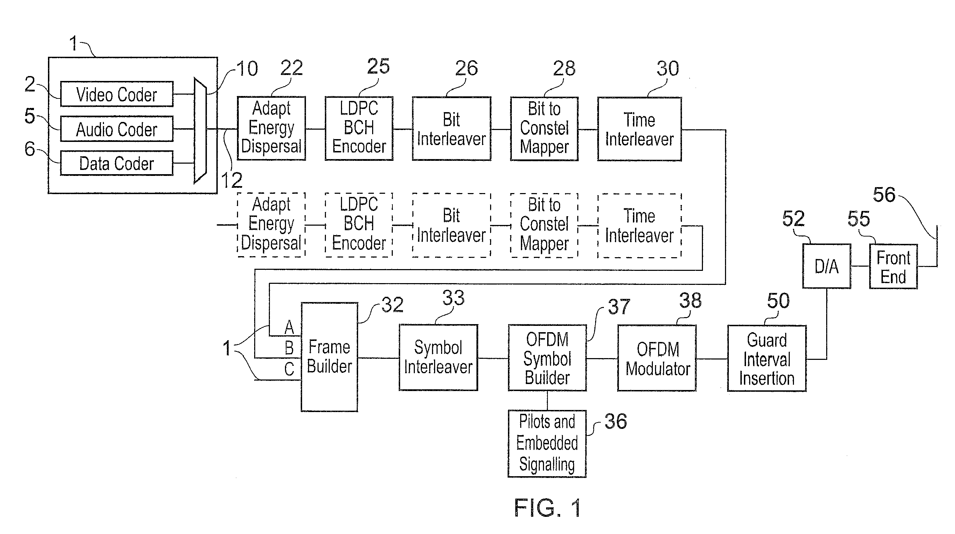

Figure 1 provides an example block diagram of an OFDM transmitter which may be used for example to transmit video images and audio signals in accordance with the DVB-T2 standard. In Figure 1 a program source 1 generates data to be transmitted by the OFDM transmitter. A video coder 2, and audio coder 4 and a data coder 6 generate video, audio and other data to be transmitted which are fed to a program multiplexer 10. The output of the program multiplexer 10 forms a multiplexed stream with other information required to communicate the video, audio and other data. The multiplexer 10 provides a stream on a connecting channel 12. There may be many such multiplexed streams which are fed into different branches A, B etc. For simplicity, only branch A will be described.

As shown in Figure 1, an OFDM transmitter receives the stream at a multiplexer adaptation and energy dispersal block 22. The multiplexer adaptation and energy dispersal block 22 randomises the data and feeds the appropriate data to a forward error correction encoder 24 which performs error correction encoding of the stream. A bit interleaver 26 is provided to interleave the encoded data bits which for the example of DVB-T2 is the LDCP/BCH encoder output. The output from the bit interleaver 26 is fed to a bit into constellation mapper 28, which maps groups of bits onto a constellation point of a modulation scheme, which is to be used for conveying the encoded data bits. The outputs from the bit into constellation mapper 28 are constellation point labels that represent real and imaginary components. The constellation point labels represent data OFDM symbols formed from two or more bits depending on the modulation scheme used. These can be referred to as data cells. These data cells are passed through a time-interleaver 30 whose effect is to interleave data cells resulting from multiple LDPC code words.

The data cells are received by a frame builder 32, with data cells produced by branch B and C in Figure 1, via other channels 31. The frame builder 32 then forms many data cells into sequences to be conveyed on OFDM symbols, where an OFDM symbol comprises a number of data cells, each data cell being mapped onto one of the sub-carriers. The number of sub-carriers will depend on the mode of operation of the system, which may include one of 1k, 2k, 4k, 8k, 16k or 32k , each of which provides a different number of sub-carriers according, for example to the following table:

**Table 1: Maximum Number of Sub-carriers per mode.**

| Mode | Sub-carriers |
|---|---|
| 1K | 853 |
| 2K | 1705 |
| 4k | 3409 |
| 8k | 6913 |
| 16k | 13921 |
| 32k | 27841 |

The sequence of data cells to be carried in each OFDM symbol is then passed to the OFDM symbol interleaver 33. The OFDM symbol is then generated by an OFDM symbol builder block 37 which introduces pilot and synchronising signals fed from a pilot and embedded signal former 36. An OFDM modulator 38 then forms the OFDM symbol in the time domain which is fed to a guard insertion processor 40 for generating a guard interval between OFDM symbols, and then to a digital to analogue converter 42 and finally to an RF amplifier within an RF front end 44 for eventual broadcast by the OFDM transmitter from an antenna 46.

For the DVB-T2 system, the number of sub-carriers per OFDM symbol can vary depending upon the number of pilot and other reserved sub-carriers. Thus, in DVB-T2, unlike in DVB-T, the number of sub-carriers for carrying data is not fixed. Broadcasters can select one of the operating modes from 1k, 2k, 4k, 8k, 16k, 32k each providing a range of sub-carriers for data per OFDM symbol, the maximum available for each of these modes being 1024, 2048, 4096, 8192, 16384, 32768 respectively. In DVB-T2 a physical layer frame is composed of many OFDM symbols. Typically the frame starts with a preamble or P1 OFDM symbol which provides signalling information relating to the configuration of the DVB-T2 deployment, including an indication of the mode. The P1 OFDM symbol is followed by one or more P2 OFDM symbols which are then followed by a number payload carrying OFDM symbols. The end of the physical layer frame is marked by a frame closing OFDM symbols (FCS). For each operating mode, the number of sub-carriers may be different for each type of OFDM symbol. Furthermore, the number of sub-carriers may vary for each according to whether bandwidth extension is selected, whether tone reservation is enabled and according to which pilot sub-carriers pattern has been selected.

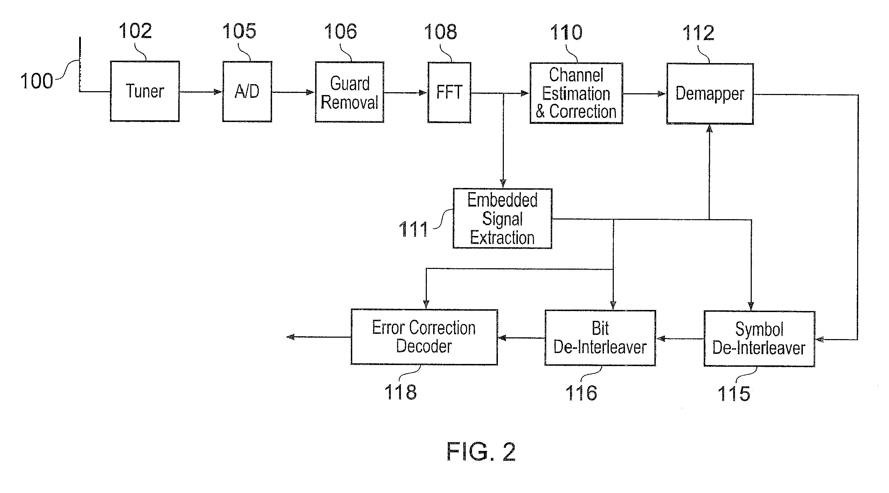

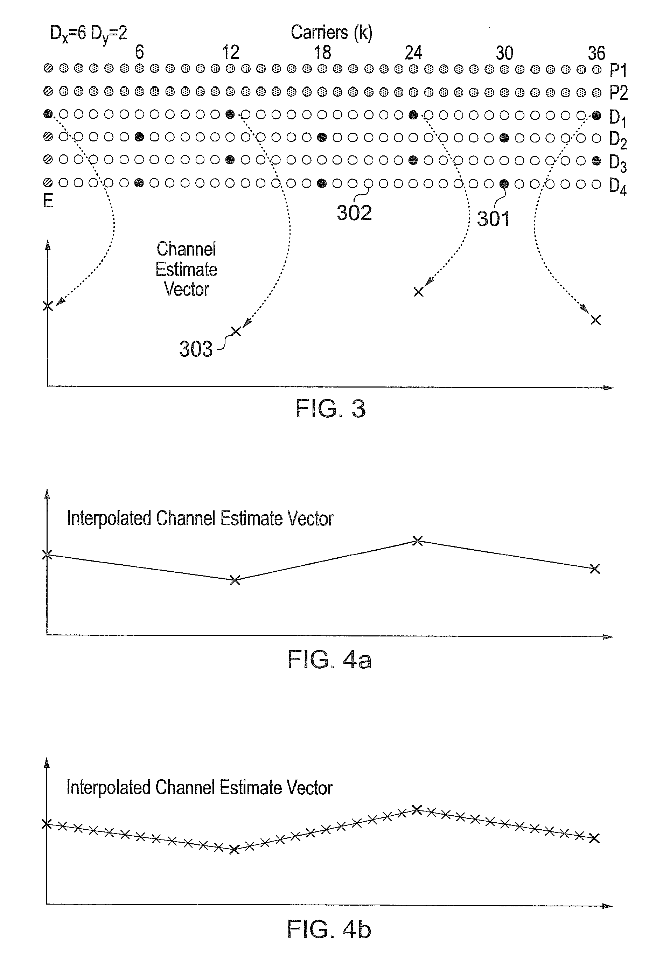

Figure 2 provides an example illustration of a receiver which may be used with the present technique. As shown in Figure 2, an OFDM signal is received by an antenna 100 and detected by a tuner 102 and converted into digital form by an analogue-to-digital converter 104. As discussed further below, in some embodiments the received OFDM may be a combination of two versions of the OFDM symbol transmitted by two separate groups of antennas. A guard interval removal processor 106 removes the guard interval from a received OFDM symbol, before the data is recovered from the OFDM symbol using a Fast Fourier Transform (FFT) processor 108 in combination with a channel estimator and corrector 110 and an embedded-signalling decoding unit 111. The demodulated data is recovered from a de-mapper 112 and fed to an OFDM symbol de-interleaver 114, which operates to effect a reverse mapping of the received data OFDM symbol to re-generate an output data stream with the data de-interleaved. Similarly, the bit de-interleaver 116 reverses the bit interleaving performed by the bit interleaver 26. The remaining parts of the OFDM receiver shown in Figure 3 are provided to effect error correction decoding 118 to correct errors and recover an estimate of the source data.

DVB-T and DVB-T2 OFDM symbols include pilot data which can be used at the receiver for synchronising and error correction. The pilot data is distributed across the sub-carriers of each OFDM symbol thus providing a number of pilot sub-carriers. Prior to transmission the pilot data is inserted in the pilot sub-carriers positions in each OFDM symbol at a boosted power level and at a known phase and amplitude. Therefore, along with frame synchronisation and time synchronisation, the pilot data can be used by the receiver to estimate an impulse response of a channel via which the OFDM symbol is transmitted. Once the receiver has an estimate of the channel impulse response, the received OFDM symbols can be corrected to take account of the channel response. Because the pilot sub-carriers are distributed across the sub-carriers in each OFDM symbol, variations in the channel response in both time and frequency can be estimated at the receiver. DVB-T and DVB-T2 differ in that, whereas DVB-T employs a single static pilot sub-carrier pattern, in DVB-T2 there are eight pilot patterns (PP1 to PP8), each of which has been designed to work optimally with a particular FFT size and guard interval combination. DVB-T2 includes four principal types of pilot sub-carriers: scattered pilot sub-carriers, continual pilot sub-carriers, edge pilot sub-carriers and frame closing pilot sub-carriers. The types of pilot sub-carriers present in each DVB-T2 OFDM symbol, depend on the OFDM symbol type. The number and location of continual pilot sub-carriers and scattered pilot sub-carriers within a normal data bearing OFDM symbol are defined by one of the eight predefined pilot sub-carrier patterns. Continual pilot sub-carriers always occupy the same sub-carrier position within an OFDM symbol whereas the position of the scattered pilot sub-carriers varies from OFDM symbol to OFDM symbol. The pilot patterns are characterised by two values Dx and Dy. Dx represents the spacing between so-called scattered pilot sub-carriers on each OFDM symbol and Dy represents the number of OFDM symbols that separate OFDM symbols with scattered pilot sub-carriers in the same sub-carriers position (this can also be thought of as the number of OFDM symbols required for the completion of pilot pattern sequence before it begins again). Table 2 summarises Dy and Dx for each of the DVB-T2 pilot patterns.

**Table 2 DVB-T2 Pilot Patterns**

| **Pilot Pattern** | **Dx** | **Dy** |
|---|---|---|
| PP1 | 3 | 4 |
| PP2 | 6 | 2 |
| PP3 | 6 | 4 |
| PP4 | 12 | 2 |
| PP5 | 12 | 4 |
| PP6 | 24 | 2 |
| PP7 | 24 | 4 |
| PP8 | 6 | 16 |

In order for a DVB-T2 receiver to successfully demodulate a received signal, a channel response for each sub-carrier position on each OFDM symbol must be estimated. As in DVB-T, in DVB-T2 this is achieved by interpolating between pilot data extracted from the pilot sub-carriers. Interpolation techniques that can be used in DVB-T2 include temporal-frequency interpolation and frequency interpolation. In temporal-frequency interpolation, channel estimates for data bearing sub-carriers between pilot sub-carriers are generated by interpolating between pilot sub-carriers on the same OFDM symbol (frequency interpolation) and across OFDM symbols (temporal interpolation). For frequency interpolation, channel estimates are provided
simply by interpolating between pilot sub-carriers on a single OFDM symbol. Frequency interpolation has an advantage over temporal-frequency interpolation because channel estimates can be produced on an OFDM symbol-by-OFDM symbol basis without the need to refer to previously received OFDM symbols or predict likely pilot values from future OFDM symbols. However, because the pilot sub-carriers are distributed across the OFDM symbol and only occupy certain sub-carrier positions, the information about the channel that can be derived from them amounts to a discretely sampled version of the channel response. Therefore, whether or not a useful channel estimate can be derived from the pilot sub-carriers of a given OFDM symbol depends on the Nyquist limit of this sampling of the channel estimate. The Nyquist limit is a function of the pilot pattern (i.e. how many pilot sub-carriers there are per OFDM symbol), the guard interval fraction of the OFDM symbol and the FFT mode currently employed. This is discussed in more detail in section 5.4 of "*Implementation guidelines for a second generation digital terrestrial television broadcasting system (DVB-T2)"* DVB Document A133 February 2009. Table 3 summarises which pilot patterns allow frequency only interpolation and under what conditions.

**Table 3 Pilot patterns suitable for Frequency only interpolation**

| **FFT Size** | **Guard Interval Fraction** | | | |
|---|---|---|---|---|
| | 1/128 | 1/32 | 1/16 | 19/256 |
| 32K | PP7 | PP4 | PP2 | PP2 |
| 16K | PP7 | PP4 | PP2 | PP2 |
| 8K | PP7 | PP4 | | |
| 4K | | PP4 | | |
| 2K | | PP4 | | |

As described above, in order to derive a channel estimate using frequency only interpolation, a channel estimate value must be provided at every data bearing sub-carrier between scattered pilots. The principle behind this will now be explained with reference to Figures 3, 4a and 4b.

Figure 3 shows the first thirty seven sub-carriers of a typical sequence of OFDM symbols that might be received at a receiver. Each horizontal line of circles represents an OFDM symbol. Each circle represents a sub-carrier within the OFDM symbol. The first two OFDM symbols P1 and P2 are pre-amble OFDM symbols (it will be appreciated that in DVB-T2, P1 symbol size is always fixed to 2048). The next four OFDM symbols, D₁ to D₄ are data bearing OFDM symbols which include scattered pilot sub-carriers 301 shown as dark circles and data bearing sub-carriers 302 shown as white circles. The first sub-carrier on each OFDM symbol at sub-carrier k=0 is an edge pilot sub-carrier. Also, the last sub-carrier on each OFDM symbol is an edge pilot carrier. As frequency interpolation occurs on an OFDM symbol-by-OFDM symbol basis, in order to derive a frequency interpolation channel estimate, only one OFDM symbol need be considered. So, considering the first data bearing OFDM symbol D₁, pilot sub-carriers are present at k=0 (the edge pilot sub-carrier), k=12, k=24, k=36 and so on (the pilot sub-carriers will be present at every twelfth sub-carriers until the end of the OFDM symbol). From these pilot sub-carriers a channel estimate vector is derived. As shown in Figure 3, the channel estimate vector includes a series of spaced data values or samples which correspond to the spacing and values of the pilot sub-carriers of OFDM symbol D₁. For example, a data value 303 of the channel estimate vector corresponds to the position and value of the pilot sub-carrier at k=12 of D₁.

Once the channel estimate vector has been generated, an interpolation is performed between the data values. This is shown in Figure 4a. The interpolation method illustrated in Figure 4a is simple linear interpolation. However, any suitable interpolation scheme could be used. Once the interpolation has been performed, channel estimate values for each sub-carrier position can be determined as shown in Figure 4b. In Figure 4b, the thin lined crosses indicate interpolated channel estimates.

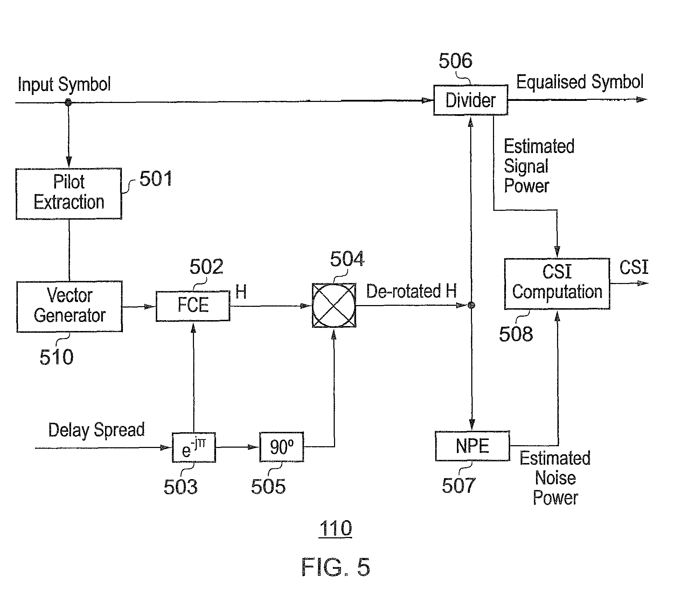

Figure 5 provides a schematic diagram of the channel estimator and corrector 110 shown in the receiver of Figure 2, which can be used to provide frequency interpolation channel estimates as described above. Although not shown, in some examples it would be possible to include in the receiver shown in Figure 5 temporal-frequency interpolation functionality for performing temporal-frequency interpolation when the conditions set out in table 3 are not met.

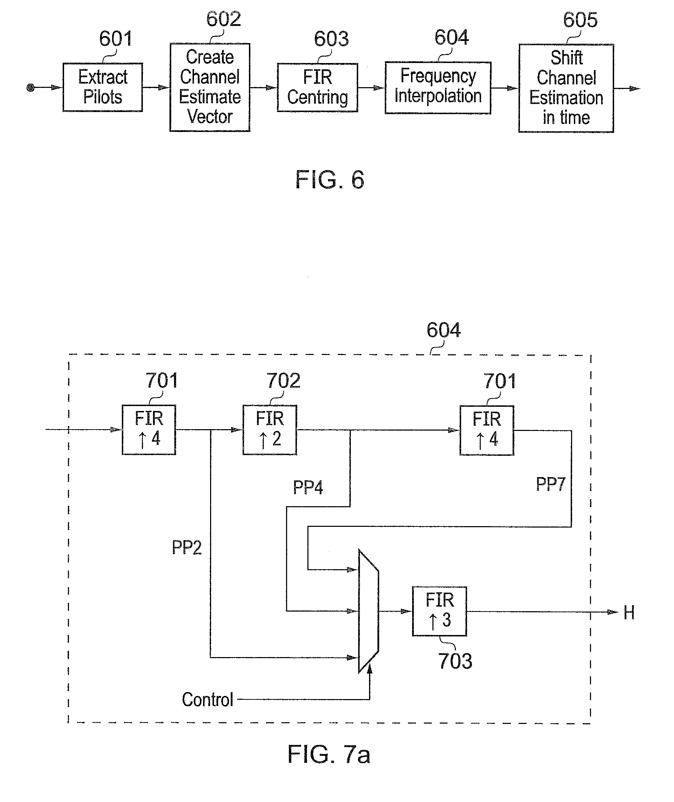

Figure 5 shows a pilot extraction unit 501 which is used to extract the pilot sub-carriers from the received input OFDM symbol and a channel estimate vector generator 510 that generates the channel estimate vector. A frequency channel estimate unit 502 includes an up-sampling filter system that undertakes a frequency interpolation process as described above and outputs a signal H corresponding to a channel estimate of the sub-carriers of the OFDM symbol. In order to ensure that the pilot sub-carriers being processed by the frequency channel estimate unit 502 are "centred" under the filter response of the frequency channel estimate unit 502, a filter centring signal is generated by a filter centring signal generating unit 503 which takes as an input the delay spread of the input OFDM symbol. The filter centring signal is input to the frequency channel estimate unit 502 which then adjusts the channel estimate vector accordingly. In order for the output signal H of the frequency channel estimate unit 502 to be corrected after it has been processed to compensate for the centring, a de-rotating unit 505 generates a de-rotating signal which is multiplied with the signal H at a multiplier 504. The de-rotated signal H is then used to equalise the received OFDM symbol by cancelling the effects of the channel. This is implemented by a divider 506 which divides the OFDM symbol samples by the channel estimate H. It will be appreciated that there are various ways of equalising a received symbol with respect to a channel through which data has passed, for example a least means squared equaliser. The de-rotated signal H is also input to a noise power estimator 507 which produces a noise power estimate. This is then input to a channel state information (CSI) processor 508 along with a estimated signal power signal output from the divider 506, the CSI processor 508 then producing a CSI estimate. Figure 6 provides a summary of a process flow showing the stages of producing the channel estimate signal H using frequency interpolation as illustrated by the channel estimator shown in Figure 5. This process flow provides an overview of the operation of the frequency channel estimate unit 502. At a first stage 601 the pilot sub-carriers are extracted from the input OFDM symbol. At a second stage 602 the channel estimate vector is created. At a third stage 603 the pilot sub-carriers are adjusted so to be centred under the filter function, at a fourth stage 604, the channel estimate vector undergoes frequency interpolation and a fifth stage 605 the channel estimate output is corrected to account for the centring adjustment applied at the third stage 603. As mentioned above, this provides a process in which channel estimates are generated using frequency only interpolation which enables channel estimates to be produced on an OFDM symbol-by-OFDM symbol basis without the need to refer to previously received OFDM symbols or predict likely pilot values from future OFDM symbols.

### Filter Cascade Design

In order to implement the process flow shown in Figure 6 in the frequency channel estimate unit shown in Figure 5, a filter arrangement needs to be provided which interpolates the channel estimate vector to create an up-sampled version which is representative of the channel estimate of the channel. The ideal properties of such a filter arrangement include:
- a linear phase response;
- filter orders to be as small as possible to reduce the overall delay and hardware size;
- appropriate level of out-of-band rejection to minimise aliasing, and
- the band-pass response to be as flat as possible to minimise signal distortion.

Clearly, from a filter design perspective, some of these properties give rise to conflicting requirements because, for example, an increase in out-of-band rejection would require an increase in the filter order or compromising on the linear phase response. Therefore, for optimal operation of the frequency channel estimate unit 505 shown in Figure 5 a "good" compromise has to be reached.

To achieve a phase response that is as linear as possible, it is appropriate to use a cascade of finite impulse response FIR filters. Each FIR filter used interpolates between the values of the vector on its input and provides as an output an up-sampled version of its input. The number of sub-carriers between each pilot sub-carrier determines the "interpolation order" of the filter cascade. That is to say that the interpolation order is the number of additional points that the filter cascade needs to produce to provide a channel estimate for each sub-carrier of the OFDM symbol. The interpolation order is given by Dx × Dy. Table 4 summarises the interpolation order for each pilot pattern which can support frequency only interpolation, and possible FIR arrangements.

**Table 4 Interpolation orders for frequency only pilot patterns and possible FIR chains**

| Pilot Pattern | Interpolation Order | Possible FIR cascades | |
|---|---|---|---|
| | (Dx × Dy) | | |
| PP2 | 6 × 2 = 12 | 4 × 3 | 2 × 2 × 3 |
| PP4 | 12 × 2 = 24 | 4 × 2 × 3 | 2 × 2 × 2 × 3 |
| PP7 | 24 × 4 = 96 | 4 × 4 × 2 × 3 | 2 × 2 × 2 × 2 × 2 × 3 |

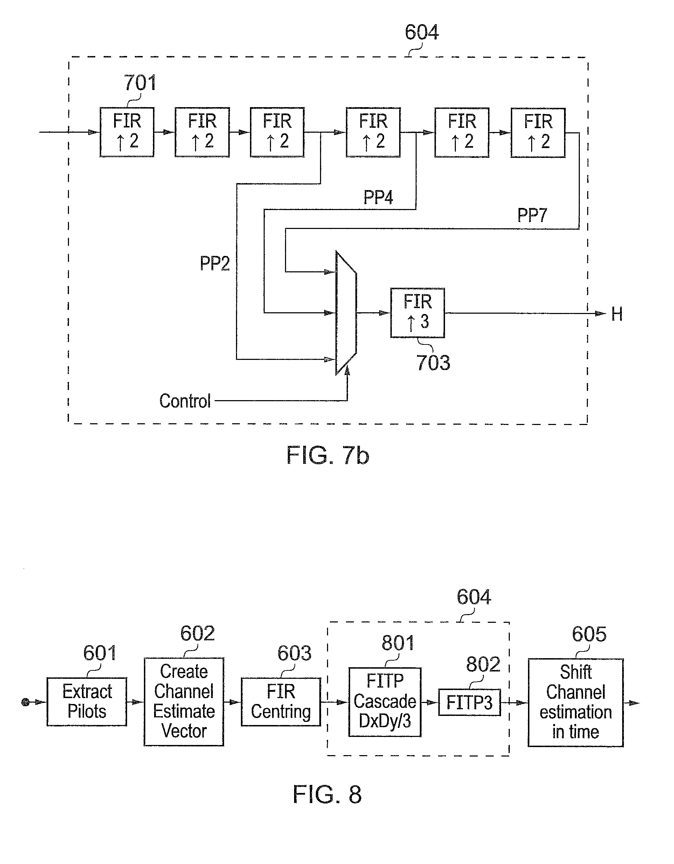

As can be seen from table 4, in order to accommodate all three pilot patterns, there are three required interpolation orders 12, 24 and 96. It would of course be possible to provide three separate FIR filters for the interpolation, one with an interpolation order of 12, one with 24 and one with 96, and switch between these filters depending on the pilot pattern. However, this is not efficient from a hardware perspective as three separate large order filters would have to be provided. It is better therefore to provide a cascade of filters the output of which can be tapped off at appropriate points to provide the correct interpolation order for whichever pilot pattern the received OFDM symbol is using. It has also been found that using filters with a low interpolation order is preferable as this reduces the interpolation error introduced to the vector being processed. Some example FIR cascades comprising low interpolation order filters are shown in the third column of table 4 and schematically illustrated in Figures 7a and 7b.

Figure 7a provides a schematic diagram of a filter cascade suitable for implementation in the frequency channel estimate unit 502 shown in Figure 5 to provide the interpolation process summarised in Figure 6. The filter cascade shown on Figure 7a includes two fourth interpolation order filters 701 (i.e. they up-sample the input vector by a factor of four) and a single second interpolation order filter 702 (which up-samples the input vector by a factor of two). The outputs of the fourth interpolation order filters 701 and the second interpolation order filter 702 are tapped off at appropriate points to provide the correct interpolation order of each pilot pattern PP2, PP4, PP7 when interpolated by a final third interpolation order filter 703 (which up-samples the final input vector by a factor of three). The interpolation order can be changed by a control signal from a control line depending on which pilot pattern is used in a current symbol.

Figure 7b provides an alternative filter cascade suitable for implementation in the frequency channel estimate unit 502. The filter cascade shown in Figure 7b is similar to that shown in Figure 7a. However, rather than have two fourth interpolation order filters, there are provided instead four additional second interpolation order filters 701.

Figure 8 provides a summary of a process flow showing the stages of producing the channel estimate signal H using frequency interpolation shown in Figures 7a and 7b. As can be seen in Figure 8, at the frequency interpolation stage 604 a first filter cascade 801 with an interpolation order of Dx × Dy/3 is provided and a second filter cascade 802 is provided with an interpolation order of three.

As will be appreciated, along with the interpolation order of the filters 701, 702, 703 shown in the cascades of Figure 7a and 7b, the filter orders (i.e. the number of delay stages), the number of bits per filter coefficient and the number of bits per sin-cos look-up table entry (required for implementing the rotation and de-rotation as shown in Figure 5) can also be varied. Varying these factors has a varying impact on the performance of the filter as a whole.

For the filter orders, it has been found that having a high filter order for the first filter of the cascade has a particular advantage. The FIR centring stage 603 requires a sin-cos look-up table that can accommodate the largest FFT size (i.e. 32K). This look-up table needs to store one cycle of sin-cos values with limited precision in terms of quantisation and sampling accuracy. For centring the first channel estimate vector from a sequence of OFDM symbols, a generated tone corresponding to the estimated channel delay spread also needs to be decimated by the interpolation order Dx × Dy (i.e. 96 for PP7). The resulting tone at this stage might not be a "pure" tone. It is therefore advantageous to increase the order of the first filter of the cascade to suppress out-of-band harmonics as much as possible.

In some implementations of the frequency channel estimate unit 502, it is envisaged that the last filter of the filter cascade, the third interpolation filter 703, may be shared with a temporal-frequency interpolation unit. In such implementations this filter can be arranged to be of a high order to provide a better out-of-band rejection.

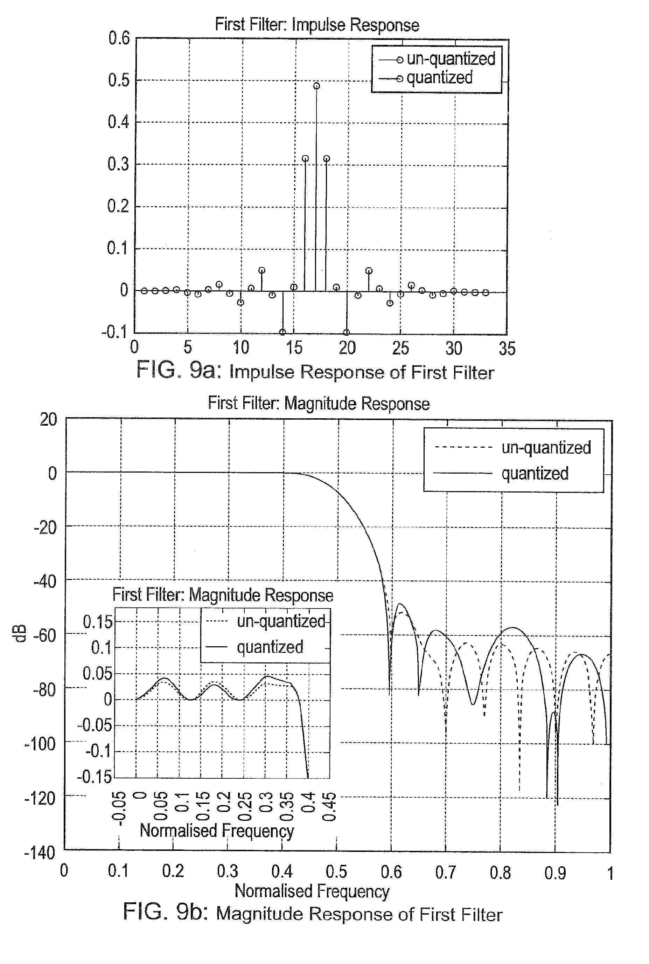

It has been found that a filter cascade as shown in Figure 7b and with the following parameters provides a good filter performance for frequency interpolation of a channel estimate vector derived from a DVB-T2 OFDM symbol:
- a filter cascade of 6 FIR interpolation filters;
- the filter cascade comprising interpolation orders of: 2 × 2 × 2 × 2 × 2 × 3 (providing a total up-sampling order of 96);
- the filters of the filter cascade having the following FIR filter orders: [33, 17, 17, 17, 17, 49]
- Hamming windows implemented in each FIR filter of the filter cascade
- bits per coefficient of each filter: [11, 10, 10, 10, 10, 12]
- number of bits per sin-cos look-up table entry for the FIR centring unit: 12 Figures 9a to 9h provide a series of graphs indicating the performance of the filter cascade shown in Figure 7b when arranged in accordance with the specifications set out above. Figure 9a provides an indication of the impulse response of the first filter (interpolation order: 2, FIR filter order: 33, bits per coefficient 11) and Figure 9b provides an indication of the magnitude response of the first filter.

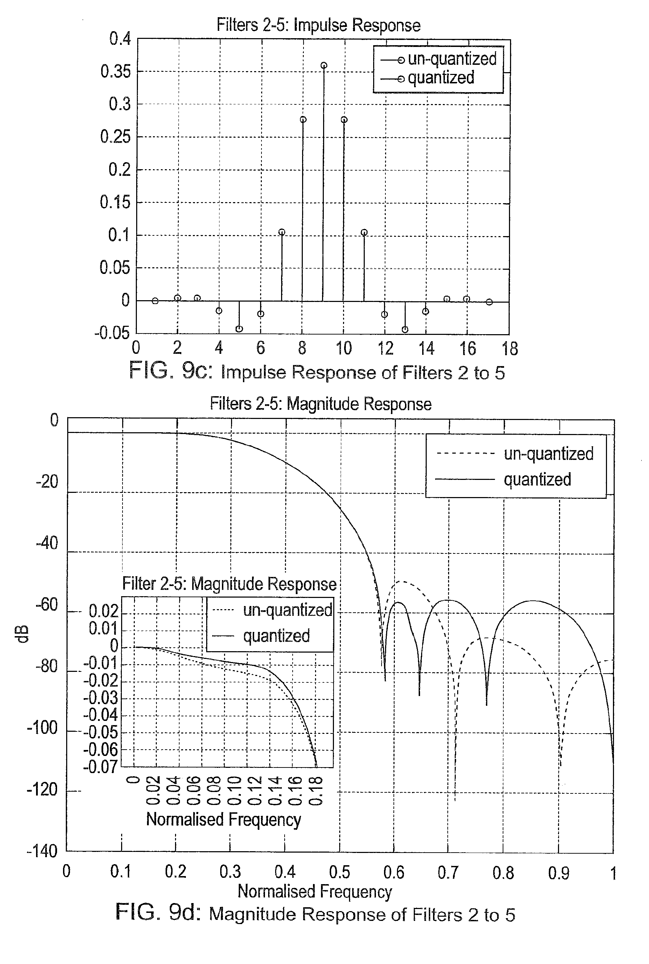

Figure 9c provides an indication of the impulse response of the second, third and fourth filters (interpolation order: 2, FIR filter order: 17, bits per coefficient 10) and Figure 9d provides an indication of the magnitude response of the second, third and fourth filters.

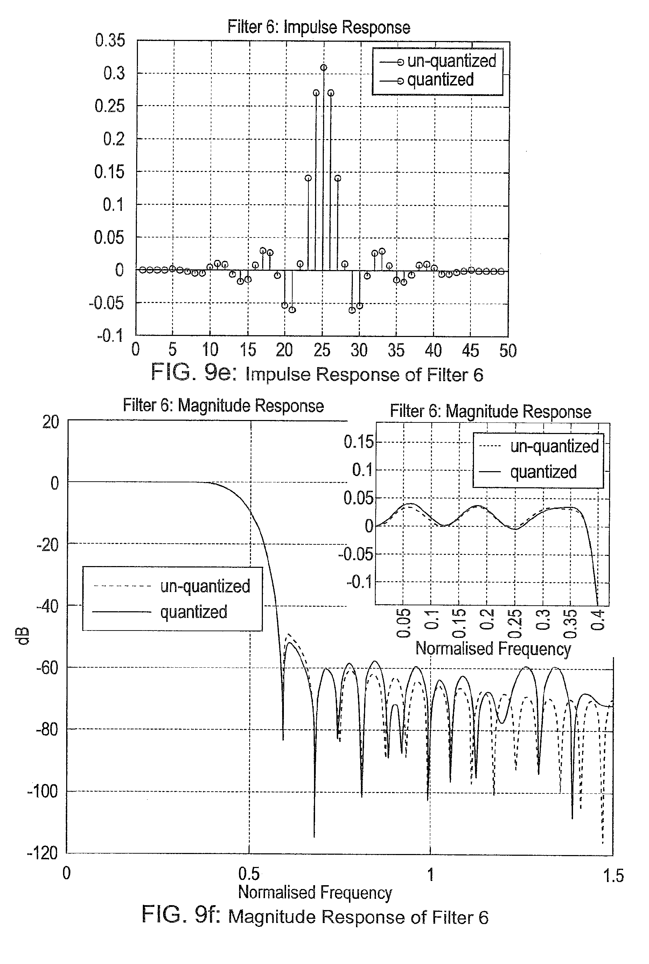

Figure 9e provides an indication of the impulse response of the last filter (interpolation order: 3, FIR filter order: 49, bits per coefficient 12) and Figure 9f provides an indication of the magnitude response of the last filter.

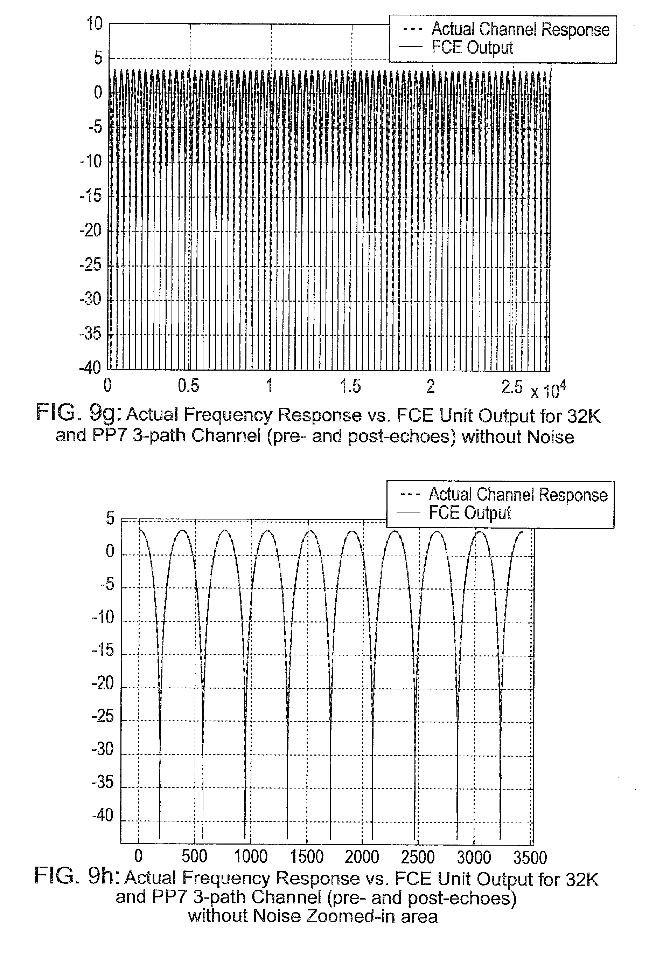

Figure 9g provides an indication of the frequency response of the entire cascade shown in Figure 7b implemented in the frequency channel estimate unit 502 for a 32K OFDM symbol with a PP7 pilot pattern.

Figure 9h provides an indication of a zoomed in view of the frequency response of the entire cascade shown in Figure 7b implemented in the frequency channel estimate unit 502 for a 32K OFDM symbol with a PP7 pilot pattern.

### Regular Sampling of Channel Estimate Vector

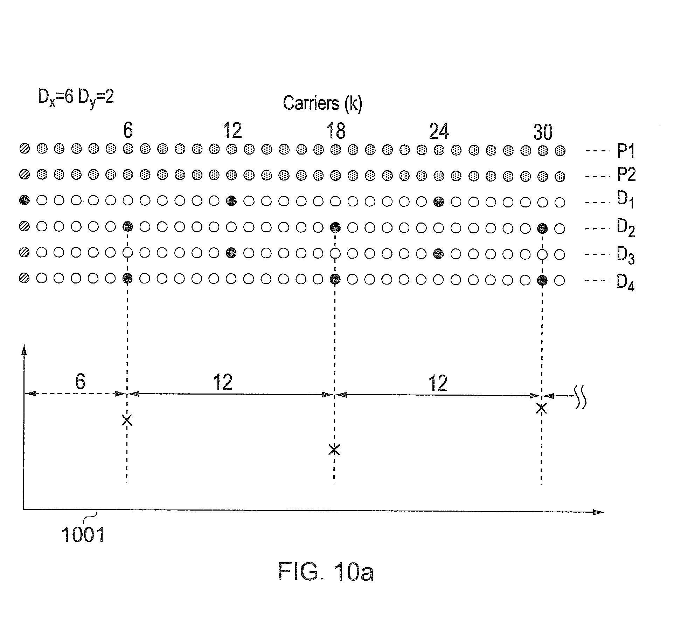

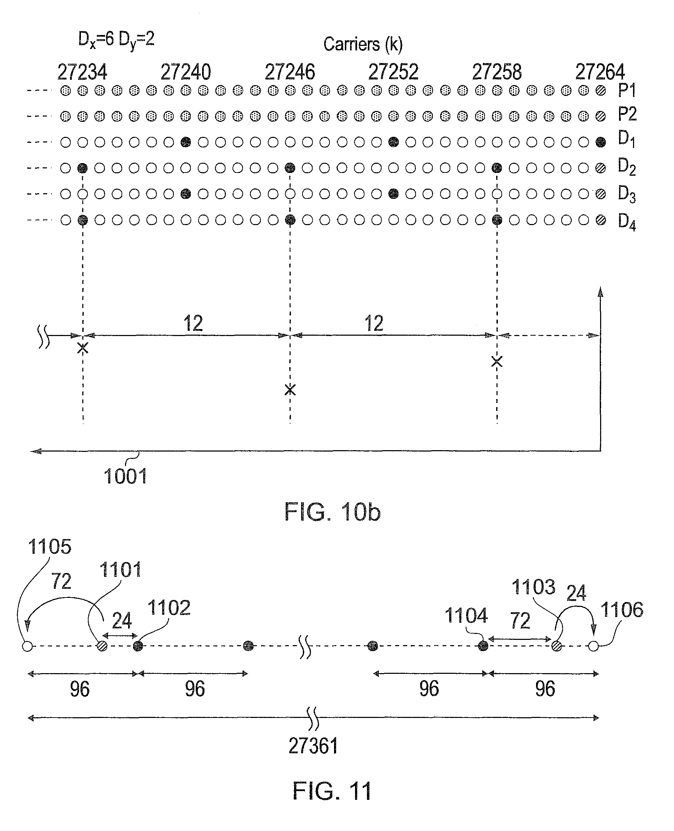

In order to provide a non-corrupted output, it is necessary that the channel estimate vector, produced by the channel estimate vector generator 510, input to the filter cascade of the frequency channel estimate unit 502 is regularly sampled. However, as the positions of scattered pilot sub-carriers varies during the pilot pattern sequence, the scattered pilot pattern derivable directly from some OFDM symbols will not be regularly sampled. This is illustrated with respect to Figure 10a and Figure 10b. Figure 10a shows a schematic diagram representing the first thirty one sub-carriers of a sequence of OFDM symbols conforming to the PP2 pilot pattern (Dy = 6, Dx = 2) and assuming an FFT mode of 32K (i.e. 27264). Figure 10b shows a schematic diagram representing the last thirty one sub-carriers of the same OFDM symbol sequence. As can be seen from Figure 10a and Figure 10b, the edge pilots for each OFDM symbol are positioned at the first sub-carrier k=0 and at the final sub-carrier k=27264. For OFDM symbol D₁, the first and last pilot sub-carriers are at k=0 and k=27264 and because D₁ represents the beginning of the scattered pilot sub-carriers sequence, the pilot sub-carriers in between the first and last pilot sub-carriers are distributed on every twelfth sub-carriers. Therefore, a channel vector derived directly from the scattered pilot sub-carriers positions of OFDM symbol D₁ will be regularly sampled.

However, from Figure 10a it can be seen that at OFDM symbol D₂, the pilot pattern PP2 dictates that the first scattered pilot sub-carrier is at sub-carrier k=6. Similarly, from Figure 10b it can be seen that for OFDM symbol D₂, the last scattered pilot is positioned on sub-carrier 27258.

Therefore, the spacing between the first pilot sub-carrier (the edge pilot sub-carriers at k=0) and the last pilot sub-carrier (the edge pilot sub-carriers at k=27264) and the first and last scattered pilot sub-carriers is six sub-carriers, whereas the spacing between pilot sub-carriers in the rest of the OFDM symbol is twelve sub-carriers. A channel estimate vector 1001 comprising spaced data values derived directly from the scattered pilots of OFDM symbol D2, would therefore represent a channel sampling of 6, 12, 12, 12...12, 12, 12, 6 which is not regularly sampled. Were the channel estimate vector to be applied to the filter cascade of the frequency channel estimate unit 502, then the output of the filter cascade would be corrupted because the filters can only interpolate regularly sampled vectors.

A technical problem of producing an equally spaced arrangement of channel samples from the pilot data can be addressed by the technique illustrated in Figure 11. Figure 11 provides a schematic diagram representing a PP7 OFDM symbol using the 32K FFT mode (27,265 sub-carriers) for "phase 1" of the pilot pattern sequence (i.e. the second OFDM symbol in the pilot pattern). In this case the first edge pilot sub-carrier 1101 and the first scattered pilot sub-carrier 1102 are separated by 24 sub-carriers. The last edge pilot sub-carrier 1103 and the last pilot sub-carrier 1104 are separated by 72 sub-carriers. The remaining scattered pilot sub-carriers of the OFDM symbol are separated by 96 sub-carriers. A channel estimate vector comprising spaced data values derived directly from the pilot sub-carriers of the OFDM symbol shown in Figure 11, would therefore represent irregular channel sampling of 24, 96, 96, 96...96, 96, 96, 72.

However, as shown in Figure 11, the channel estimate vector can be extended by the addition of two additional data values representing a new "virtual" first pilot sub-carrier 1105 and a new "virtual" final pilot sub-carrier 1106. The new virtual pilot sub-carriers 1105, 1106 are positioned such that they are spaced from the nearest adjacent scattered pilots 1104, 1104 by a total of 96 sub-carriers. Thus, when a channel estimate is generated based on the OFDM symbol with the additional virtual pilot sub-carriers, a regularly sampled channel estimate vector can be produced. The positioning of the new virtual sub-carriers with respect to the original OFDM symbol (i.e. their distance in sub-carriers beyond the edge pilot sub-carriers) will depend on the phase of the pilot pattern of the OFDM symbol in question. As will be appreciated, in one example the above technique can be implemented by the channel estimate vector generator 510 before the channel estimate vector is processed by the filter cascade. The virtual pilots can be copied from any appropriate pilot sub-carrier from the received OFDM symbol. In one example the virtual pilots are generated by copying the nearest edge pilot sub-carriers into each virtual pilot position.

As is shown in Figure 11, once the virtual pilot sub-carriers have been added, the OFDM symbol has an effective length of 27361 sub-carriers. However, for the 32K mode, the normal length is only 27264 sub-carriers. Therefore, when employing this technique, before being output by the frequency channel estimate unit 502, the channel estimate signal must first be truncated in accordance with the amount by which the channel estimate has been extended by the addition of the virtual pilot samples. For each pilot pattern phase of the pilot pattern sequence, a corresponding complex tone can be generated with the same number of data values as the extended channel estimation vector. Therefore, when de-rotating the output signal H when using this technique using the de-rotation signal generator 505 and the multiplier 504, the same truncation should be applied to the de-rotation signal.

### Outlying Frequency Interpolation Error

As will be understood, when processing the channel estimation using frequency interpolation between pilot sub-carriers of an OFDM symbol, there will be an increased interpolation error at the outlying frequencies (in other words the edges) of the channel. This is because beyond the edge of the OFDM symbol, there is no further information (i.e. pilot sub-carriers from which pilot data can be extracted) with which to increase the accuracy of the interpolation. In other words, interpolated points are generated based only on pilot sub-carriers to one side of the point being interpolated. This contrasts for example with frequencies near the centre of the OFDM symbol which have plenty of pilot sub-carriers either side from which to extract pilot data and thus improve the accuracy of channel estimate interpolation.

In some examples of the present invention, the channel estimate vector generator 510 is operable to extend the channel estimate vector at either end by appending additional samples, to reduce interpolation errors at the edge of the channel estimate. The extended channel estimate vector is then processed by the filter cascade in the normal way and appropriate truncations take place at the filter output. In some examples the input channel estimate vector is extended at lower and upper edges by a duration that after zero-value sample insertion (in other words up-sampling the input vector before applying the filtering) equals half the impulse response of the corresponding filter in the cascade. A first method for appending additional samples to the channel estimate vector includes taking copying a first series of samples from the beginning of the channel estimate vector to extend one side of the channel estimate vector and copying a second series of samples from the end of the channel estimate vector to extend the other side of the channel estimate vector.

A second method for appending additional samples to the channel estimate vector includes mirroring a first series of samples from the beginning of the channel estimate vector about the first sample of the channel estimate vector to extend one side of the channel estimate and mirroring a second series of samples from the end of the channel estimate about the last sample of the channel estimate vector to extend the other side of the channel estimate vector. The second method is similar to the first method except that the extended sections from the second method are the reverse of the extended sections from the second method.

In a third method a slope matching equation is used to attempt to extend either end of the channel estimate vector by matching the slope at either end of the channel estimate vector.

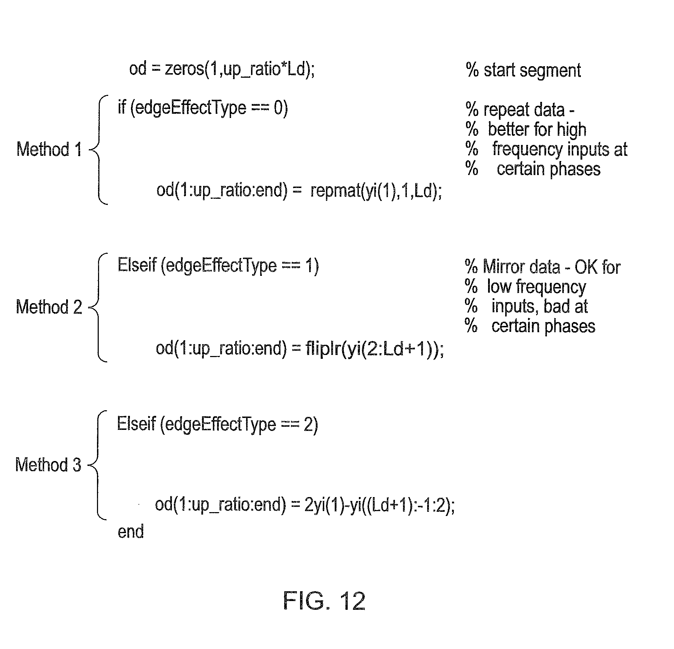

Figure 12 provides MATLAB code for the three different methods of extending the channel estimate vector.

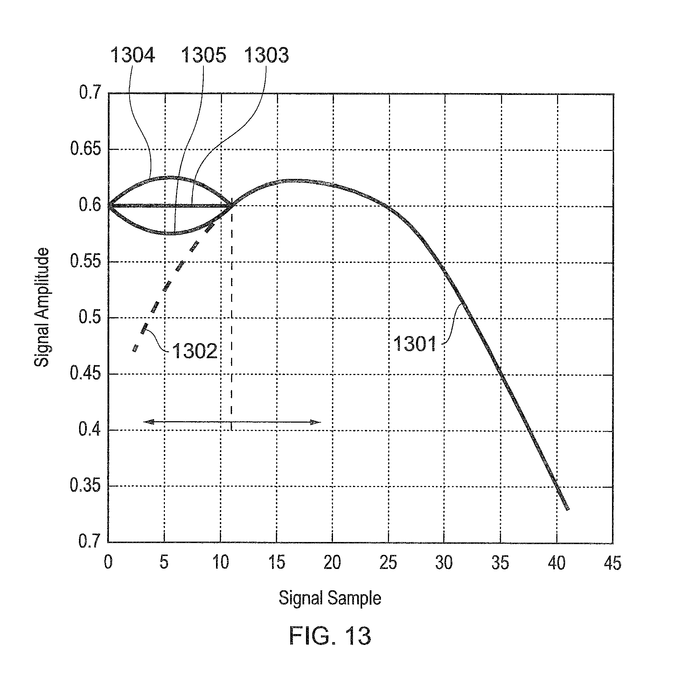

Figure 13 provides a graph of an end section of channel estimate vector 1301 which, were it to be interpolated by the filter array, may give rise to interpolation errors at its edges A first curve 1304 shown by a broken line indicates an ideal extension of the channel estimate vector. A second curve 1303 indicates an edge extension provided by method 0, a second curve 1304 indicates an edge extension provided by method 1 and a third curve 1305 indicates an edge extension provided by method 2.

In some examples the channel estimate vector is extended as set out above at every filter in the cascade. However, in some examples of frequency interpolation, errors introduced due to interpolation at the edge of the channel estimate vector become increasingly worse as the number of filters in the filter cascade is increased. This is because the "edge effect region" effectively grows as the channel estimate vector is processed by each filter in the cascade. Therefore in one example, the extended parts of the channel estimate are generated only once at the first stage of the cascade and each filter of the cascade undertakes an interpolation based on these extended parts.

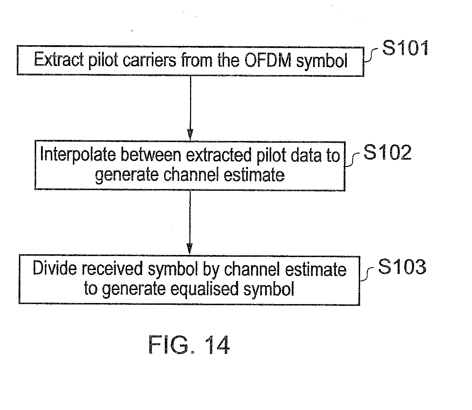

Figures 14 provides a flow diagram summarising a method according to the present invention.

In Figure 14 at step S101 the pilot sub-carriers are extracted from a received OFDM symbol. At step S102 the extracted pilot data is interpolated to generate a channel estimate and at step S103 the received OFDM symbol is divided by the channel estimate to produce an equalised OFDM symbol.

The following numbered clauses provide further example embodiments of the present invention:
1. A method of receiving an Orthogonal Frequency Division Multiplexed (OFDM) symbol, the OFDM symbol having been received via a channel, each OFDM symbol comprising a plurality of data bearing sub-carriers on which data is transmitted and a plurality of pilot bearing sub-carriers on which pilot data is transmitted, the pilot sub-carriers being distributed throughout each OFDM symbol, the method comprising
   extracting the pilot data from the pilot sub-carriers of each OFDM symbol, generating a channel estimate vector comprising a plurality of samples, a spacing and value of the samples corresponding to the spacing and values of the extracted pilot data from the pilot sub-carriers,
   producing a channel estimate by interpolating between the samples of the channel estimate vector to produce an up-sampled version of the channel estimate vector corresponding to the channel estimate of the channel response of the channel at each sub-carriers position of the OFDM symbol, and
   equalising each received OFDM symbol by cancelling the effect of the channel according to the channel estimate to increase a likelihood of correctly recovering data conveyed by the OFDM symbol.
2. A method according to clause 1, wherein the pilot bearing sub-carriers include a plurality of scattered pilot sub-carriers distributed across the OFDM symbol such that adjacent scattered pilot sub-carriers are equally separated from each other by a predefined number of data-bearing sub-carriers, a first edge pilot sub-carrier on a first pilot sub-carrier of the OFDM symbol, and a final edge pilot sub-carrier on a pilot final sub-carrier of the OFDM symbol, the method comprising
   forming first and last samples of the channel estimate vector based on the first and final edge pilot carriers at virtual carrier positions displaced from nearest pilot carriers by the predefined number of data-bearing sub-carriers thereby ensuring that samples which make up the channel estimate vector are equally spaced.
3. A method according to clause 2, comprising adjusting the phase and/or amplitude of the first and last samples in accordance with the amount by which the virtual carriers are displaced.
4. A method according any of clauses 1 to 3, comprising
   appending to the beginning of the channel estimate vector a first additional set of samples and appending to the end of the channel estimate vector a second additional set of samples prior to the interpolation.
5. A method according to claim 4, comprising producing the first additional set of samples by copying a first portion from the beginning of the channel estimate vector and producing the second additional set of samples by copying a second portion from the end of the channel estimate vector.
6. A method according to claim 5, comprising producing the first additional set of samples by copying and reversing the order of a first portion from the beginning of the channel estimate vector and producing the second additional set of samples by copying and reversing the order of a second portion from the end of the channel estimate vector.
7. A method according to claim 5, comprising producing the first additional set of samples by matching a slope from a first portion from the beginning of the channel estimate vector and producing the second additional set of samples by matching a slope from a second portion from the end of the channel estimate vector.

Various modifications may be made to the embodiments herein before described. For example it will be understood that the particular component parts of which the frequency channel estimate unit described above is comprised may be manifested in ways that do no conform precisely to the forms described above and shown in the diagrams. For example aspects of the invention may be implemented in the form of a computer program product comprising processor implementable instructions stored on a data sub-carriers such as a floppy disk, optical disk, hard disk, PROM, RAM, flash memory or any combination of these or other storage media, or transmitted via data signals on a network such as an Ethernet, a wireless network, the Internet, or any combination of these of other networks, or realised in hardware as an ASIC (application specific integrated circuit) or an FPGA (field programmable gate array) or other configurable or bespoke circuit suitable to use in adapting the conventional equivalent device.

Embodiments of the present invention may also find application with other appropriate transmission standards such as the cable transmission standard known as DVB-C2. For the example of DVB-C2, it will be appreciated that the OFDM symbols are not transmitted and received via a radio frequency sub-carriers, but via cable and so an appropriate adaptation of the transmitter and receiver architecture can be made. However, it will be appreciated that the present invention is not limited to application with DVB and may be extended to other standards for transmission or reception, both fixed and mobile.

## Claims

1. A receiver for receiving OFDM symbols transmitted via a channel, the OFDM symbols comprising a plurality of data bearing sub-carriers on which data is transmitted and a plurality of pilot bearing sub-carriers on which pilot data is transmitted, the pilot sub-carriers being distributed throughout each OFDM symbol, the receiver comprising
a pilot data extractor for extracting pilot data from the pilot sub-carriers of each OFDM symbol, and
a channel estimator operable to generate a frequency domain channel estimate of the channel, the receiver being operable to equalise each received OFDM symbol by substantially cancelling the effects of the channel according to the channel estimate produced by the channel estimator to increase a likelihood of correctly recovering data conveyed by the OFDM symbol, wherein the channel estimator comprises
a channel estimate vector generator arranged to generate a channel estimate vector comprising a plurality of samples, a spacing and value of the samples corresponding to the spacing and values of the pilot data extracted from the pilot sub-carriers, and
a filter cascade arranged to receive as an input the channel estimate vector and operable to produce the channel estimate by interpolating between the samples of the channel estimate vector to produce an up-sampled version of the channel estimate vector corresponding to the channel estimate of the channel response of the channel at each sub-carrier position of the OFDM symbol.

2. A receiver according to claim 1, the filter cascade comprising six up-sampling filter stages, wherein
the first, second, third, fourth and fifth filter stage up-sample by a factor of two and the sixth filter stage up-samples by a factor of three.

3. A receiver according to claim 2, wherein the first filter stage has a higher order than the second, third, fourth and fifth filter stages.

4. A receiver according to claim 2 or 3, wherein the order of the first filter stage is thirty three, the order of the second, third, fourth and fifth filter stages is seventeen, and the order of the sixth filter stage is forty nine.

5. A receiver according to any of claims 2 to 4, wherein the six up-sampling filter stages are combined with coefficients forming a Hamming window.

6. A receiver according to any of claims 2 to 5, wherein a number of bits per coefficient for the first filter stage is eleven, a number of bits per coefficient for the second, third, fourth and fifth filter stages is ten, and a number of bits per coefficient for the sixth filter stage is twelve.

7. A receiver according to any preceding claim, wherein the pilot bearing sub-carriers include a plurality of scattered pilot sub-carriers distributed across the OFDM symbol such that adjacent scattered pilot sub-carriers are equally separated from each other by a predefined number of data-bearing sub-carriers, a first edge pilot sub-carrier on a first pilot sub-carrier of the OFDM symbol, and a final edge pilot sub-carrier on a final pilot sub-carrier of the OFDM symbol, wherein
the channel estimate vector generator is arranged to ensure that the samples of the channel estimate vector are equally spaced by forming first and last samples of the channel estimate vector based on the first and final edge pilot carriers at virtual carrier positions displaced from nearest pilot carriers by the predefined number of data-bearing sub-carriers.

8. A receiver according to claim 7, wherein the phase and/or amplitude of the first and last samples are adjusted in accordance with the amount by which the virtual carriers are displaced.

9. A receiver according to any preceding claim, wherein the channel estimate vector generator is operable to append to the beginning of the channel estimate vector a first additional set of samples and append to the end of the channel estimate vector a second additional set of samples, prior to interpolation by the filter cascade.

10. A receiver according to claim 9, wherein the first additional set of samples are produced by copying a first portion from the beginning of the channel estimate vector and the second additional set of samples are produced by copying a second portion from the end of the channel estimate vector.

11. A receiver according to claim 9, wherein the first additional set of samples are produced by copying and reversing the order of a first portion from the beginning of the channel estimate vector and the second additional set of samples are produced by copying and reversing the order of a second portion from the end of the channel estimate vector.

12. A receiver according to claim 9, wherein the first additional set of samples are produced by matching a slope from a first portion from the beginning of the channel estimate vector and the second additional set of samples are produced by matching a slope from of a second portion from the end of the channel estimate vector.

13. A method of receiving an Orthogonal Frequency Division Multiplexed (OFDM) symbol, the OFDM symbol having been received via a channel, each OFDM symbol comprising a plurality of data bearing sub-carriers on which data is transmitted and a plurality of pilot bearing sub-carriers on which pilot data is transmitted, the pilot sub-carriers being distributed throughout each OFDM symbol, the method comprising
extracting the pilot data from the pilot sub-carriers of each OFDM symbol,
generating a channel estimate vector comprising a plurality of samples, a spacing and value of the samples corresponding to the spacing and values of the extracted pilot data from the pilot sub-carriers,
producing a channel estimate by interpolating between the samples of the channel estimate vector to produce an up-sampled version of the channel estimate vector corresponding to the channel estimate of the channel response of the channel at each sub-carriers position of the OFDM symbol, and
equalising each received OFDM symbol by cancelling the effect of the channel according to the channel estimate to increase a likelihood of correctly recovering data conveyed by the OFDM symbol.

14. A method according to claim 13, wherein interpolating filtering the samples of the channel estimate vector includes by six up-sampling filter stages, the first, second, third, fourth and fifth filter stage up-sampling by a factor of two and the sixth filter stage up-sampling by a factor of three.

15. A method according to claim 14, wherein the first filter stage has a higher order than the second, third, fourth and fifth filter stages.

16. A method according to claim 14 or 15, wherein the order of the first filter stage is thirty three, the order of the second, third, fourth and fifth filter stages is seventeen, and the order of the sixth filter stage is forty nine.

17. A method according to any of claims 14 to 16, wherein the six up-sampling filter stages are combined with coefficients forming a Hamming window.

18. A method according to any of claims 14 to 17, wherein a number of bits per coefficient for the first filter stage is eleven, a number of bits per coefficient for the second, third, fourth and fifth filter stages is ten, and a number of bits per coefficient for the sixth filter stage is twelve.

19. A computer program providing computer executable instructions which when loaded onto a computer causes the computer to perform the method according to any of claims 13 to 18.

20. A data carrier having a recording medium, the recording medium having recorded thereon a computer program according to Claim 19.

21. A receiver for receiving OFDM symbols transmitted via a channel, the OFDM symbols comprising a plurality of data bearing sub-carriers on which data is transmitted and a plurality of pilot bearing sub-carriers on which pilot data is transmitted, the pilot sub-carriers being distributed throughout each OFDM symbol, the receiver comprising
a pilot data extractor for extracting pilot data from the pilot sub-carriers of each OFDM symbol, and
a channel estimator operable to generate a frequency domain channel estimate of the channel, the receiver being operable to equalise each received OFDM symbol by substantially cancelling the effects of the channel according to the channel estimate produced by the channel estimator to increase a likelihood of correctly recovering data conveyed by the OFDM symbol, the channel estimator comprising
a channel estimate vector generator arranged to generate a channel estimate vector comprising a plurality of samples, a spacing and value of the samples corresponding to the spacing and values of the pilot data extracted from the pilot sub-carriers, and
an interpolator arranged to receive as an input the channel estimate vector and operable to produce the channel estimate by interpolating between the samples of the channel estimate vector to produce an up-sampled version of the channel estimate vector corresponding to the channel estimate of the channel response of the channel at each sub-carrier position of the OFDM symbol, wherein
the pilot bearing sub-carriers include a plurality of scattered pilot sub-carriers distributed across the OFDM symbol such that adjacent scattered pilot sub-carriers are equally separated from each other by a predefined number of data-bearing sub-carriers, a first edge pilot sub-carrier on a first pilot sub-carrier of the OFDM symbol, and a final edge pilot sub-carrier on a final pilot sub-carrier of the OFDM symbol, the channel estimate vector generator being arranged to ensure that the samples of the channel estimate vector are equally spaced by forming first and last samples of the channel estimate vector based on the first and final edge pilot carriers at virtual carrier positions displaced from nearest pilot carriers by the predefined number of data-bearing sub-carriers.

22. A receiver for receiving OFDM symbols transmitted across a channel, the OFDM symbols comprising a plurality of data bearing sub-carriers on which data is transmitted and a plurality of pilot bearing sub-carriers on which pilot data is transmitted, the pilot sub-carriers being distributed throughout each OFDM symbol, the receiver comprising
a pilot data extractor for extracting pilot data from the pilot sub-carriers of each OFDM symbol, and
a channel estimator operable to generate a frequency domain channel estimate of the channel, the receiver being operable to equalise each received OFDM symbol by substantially cancelling the effects of the channel according to the channel estimate produced by the channel estimator to increase a likelihood of correctly recovering data conveyed by the OFDM symbol, the channel estimator comprising
a channel estimate vector generator arranged to generate a channel estimate vector comprising a plurality of samples, a spacing and value of the samples corresponding to the spacing and values of the pilot data extracted from the pilot sub-carriers, and
an interpolator arranged to receive as an input the channel estimate vector and operable to produce the channel estimate by interpolating between the samples of the channel estimate vector to produce an up-sampled version of the channel estimate vector corresponding to the channel estimate of the channel response of the channel at each sub-carrier position of the OFDM symbol, wherein
the channel estimate vector generator is operable to append to the beginning of the channel estimate vector a first additional set of samples and append to the end of the channel estimate vector a second additional set of samples, prior to interpolation by the interpolator.
